# EUROPÄISCHE PATENTSCHRIFT

(11) **EP 3 274 278 B1**
(45) Veröffentlichungstag und Bekanntmachung des Hinweises auf die Patenterteilung: **23.06.2021**
(21) Anmeldenummer: 16711995.7
(22) Anmeldetag: 10.03.2016
(51) Int. Cl.: B65G 21/12, B65G 41/00

(54) **FÖRDEREINRICHTUNG FÜR EINE MATERIAL-VERARBEITUNGSEINRICHTUNG**
CONVEYOR DEVICE FOR A MATERIAL PROCESSING DEVICE
DISPOSITIF DE TRANSPORT POUR UN DISPOSITIF DE TRAITEMENT DE MATÉRIAUX

(30) Priorität: 25.03.2015 DE 102015104498
(43) Veröffentlichungstag der Anmeldung: 31.01.2018
(73) Patentinhaber: KLEEMANN GMBH, 73037 Göppingen (DE)
(72) Erfinder: WELLER, Christian, 73312 Geislingen (DE); FRANZEN, Felix, 55268 Nieder-Olm (DE)
(74) Vertreter: Herrmann, Jochen
(86) Internationale Anmeldenummer: PCT/EP2016/055207
(87) Internationale Veröffentlichungsnummer: WO 2016/150727

(56) Entgegenhaltungen:
- EP-A2- 0 641 607
- JP-U- S51 162 485
- US-A- 5 333 725
- US-A1- 2006 088 403
- US-B1- 6 543 622

## Beschreibung

Die Erfindung betrifft eine Fördereinrichtung für eine Material-Verarbeitungseinrichtung, mit einem Basisabschnitt und einem Transportabschnitt, wobei der Basisabschnitt zur Ankopplung an die Material-Verarbeitungseinrichtung ausgebildet ist und über einen Gelenkabschnitt mit dem Transportabschnitt derart verbunden ist, dass der Transportabschnitt zwischen einer Arbeitsposition und einer Transportposition auf zumindest einem Teil des Verstellweges des Transportabschnitts mittels eines ersten und eines zweiten Drehgelenks um eine Längsachse dreh- oder schwenkbar und einklappbar ist. Die Erfindung betrifft auch ein Verfahren zur Umrüstung einer Fördervorrichtung.

Aus der Schrift EP 1 628 896 B1 ist ein klappbares Förderband bekannt, das seitlich an einem fahrbaren Chassis angebracht ist. Es besteht aus drei Teilbereichen. Ein Basisbereich ist fest mit dem Chassis verbunden. Ein Mittelbereich ist schwenkbar mit einem Basisbereich verbunden, während ein Endbereich schwenkbar an dem Mittelbereich gelagert ist. Eine zweiteilige Stützeinrichtung verbindet das Chassis mit dem Endabschnitt. Die zwei Teilabschnitte der Stützeinrichtung können teleskopartig ineinander geschoben und in einer jeweiligen Position fixiert werden. Es sind drei bewegliche Verbindungen gebildet. Eine erste bewegliche Verbindung ist zwischen dem ersten Teilabschnitt der Stützeinrichtung und dem Chassis, eine zweite bewegliche Verbindung zwischen den beiden Teilabschnitten und eine dritte bewegliche Verbindung zwischen dem zweiten Teilabschnitt und dem Endbereich des Förderbandes ausgebildet. Die erste und die dritte bewegliche Verbindung ermöglichen jeweils zwei oder drei Bewegungsfreiheitsgrade, während die zweite eine Längsverstellung und eine Rotation ermöglicht. Durch die Stützeinrichtung kann das Förderband in seiner Arbeitsposition gehalten werden. Durch die beweglichen Verbindungen kann die Stützeinrichtung beim Klappen des Förderbandes der Bewegung des Förderbandes folgen. Die beiden äußeren Teilbereiche des Förderbandes können so, beispielsweise zum Transport, an das Chassis herangeklappt werden. Durch die überlagerte Klappbewegung wird das Förderband an der Seite des Chassis nach vorne oder nach hinten zeigend ausgerichtet, so dass es nicht nach oben über das Chassis übersteht. Dabei zeigt das Band mit seiner Fläche in Richtung des Chassis, wodurch ein geringer Platzbedarf erreicht wird. Die Anordnung benötigt eine Vielzahl beweglicher Bauelemente, die in ihren Längen und Freiheitsgraden exakt aufeinander abgestimmt sein müssen. Wird eines der Bauelemente, beispielsweise durch äußere mechanische Einwirkungen während des vorgesehenen Einsatzes unter rauen Arbeitsbedingungen, gegenüber den anderen beweglichen Bauelementen geringfügig dejustiert, wird die Bewegung blockiert. Wird dann die Krafteinleitung durch die Antriebselemente nicht sofort unterbrochen, kann dies zu einer starken Beschädigung des Förderbandes und der zugehörigen Stützelemente führen.

Die Schrift US 8,113,332 B2 beschreibt ein Fördersystem für eine mobile Siebanlage. Ein dreiteiliges Förderband kann zwischen einer Arbeits- und einer Transportposition eingestellt werden. In der Arbeitsposition sind die drei Teile in Reihe zueinander ausgerichtet. Zum Transport wird das äußere Endteil des Fördersystems um eine quer zum Förderband verlaufende erste Achse eingeklappt, so dass es parallel zu einem Mittelteil des Fördersystems liegt. Anschließend wird das Mittelteil gegenüber einem Basisteil um eine zweite Achse eingeklappt. Die erste und die zweite Achse stehen in einem Winkel zueinander. Dadurch wird das Fördersystem beim Klappen um die zweite Achse zusätzlich um seine Längsachse gedreht, so dass das Band in etwa horizontal ausgerichtet längs an der Seite der Siebanlage anliegt. Dabei ist das Band mit seiner Transportfläche zur Siebanlage hin ausgerichtet ist. Auch hier sind viele beweglich gelagerte Verbindungselemente zwischen dem Basisteil und dem Mittelteil erforderlich, welche für eine ausreichende Belastbarkeit in der Arbeitsposition und die erforderliche Beweglichkeit des Mittelteils gegenüber dem Basisteil ausgelegt sind. Somit ergibt sich auch hier der Nachteil, dass die Bauteile auch nach langer Betriebszeit und hohen mechanischen Belastungen noch exakt aufeinander ausgerichtet sein müssen, um den komplexen Bewegungsablauf zu gewährleisten.

Aus der EP 2 137 090 B1 ist eine Materialverarbeitungsvorrichtung mit einem Förderer bekannt. Der Förderer steht in einem ausgeklappten Zustand seitlich von der Vorrichtung ab und kann derart zu dem Förderer eingeklappt und dabei um seine Längsachse gedreht werden, dass seine Vorder- oder Rückseite der Vorrichtung zugewandt ist. Der Förderer ist mit einer entsprechenden Gelenkverbindung, welche zwei senkrecht zueinander stehende Drehbewegungen ermöglicht, mit der Vorrichtung verbunden. Ein starres Verbindungselement ist ober- oder unterhalb des Förderers angeordnet und beweglich an einer Seite des Förderers und an der Vorrichtung befestigt. Ein Linearbetätigungselement ist zwischen dem Förderer und dem Verbindungselement angeordnet. Ausgefahren bilden das Linearbetätigungselement, die eine Seite des Förderers und das Verbindungselement ein Dreieck aus. Beim Einfahren des Linearbetätigungselements wird die Seite des Förderers annähernd parallel an das Verbindungselement gezogen. Dabei dreht sich der Förderer um die beiden Drehachsen der Gelenkverbindung, so dass er sich seitlich an die Materialverarbeitungsvorrichtung anlegt.

Die WO 2013/057300 beschreibt eine Materialverarbeitungsvorrichtung mit einem in einer Arbeitsposition seitlich abstehend angeordneten Förderband. Zum Transport kann das Förderband um eine erste Gelenkverbindung an die Materialverarbeitungsvorrichtung angeklappt werden. Dabei erfolgt eine Drehbewegung des Förderbandes derart, dass es mit seiner Vorder- oder Rückseite an einer ersten Seite der Materialverarbeitungsvorrichtung anliegt. Das jetzt über die erste Seite der Materialverarbeitungsvorrichtung überstehende Ende des Förderbandes kann über eine zweite Gelenkverbindung umgeklappt werden, so dass es an einer zweiten Seite der Materialverarbeitungsrichtung anliegt. Die erste Gelenkverbindung ist durch eine schräg angeordnete Drehachse gebildet, um die das Mittelteil des Förderbandes zur Materialverarbeitungsvorrichtung gedreht wird.

Aus der EP 0 641 607 A2 ist eine Materialverarbeitungsvorrichtung mit Förderern bekannt, die in der Arbeitsposition seitlich von der Vorrichtung abstehen. Die Förderer sind zweigeteilt und bestehen aus einem Kopf- und einem Fußabschnitt. Zur Bewegung eines Förderers in die Transportposition kann der Fußabschnitt um ein Drehgelenk in eine senkrechte Stellung gedreht werden. Durch ein weiteres Drehgelenk kann der Kopfabschnitt längs der Verarbeitungsvorrichtung ausgerichtet werden. In der Transportposition befindet sich der Förderer innerhalb der äußeren Dimensionen der Verarbeitungsvorrichtung. Bei dieser Anordnung ergibt sich der Nachteil, dass die Drehrichtung des zweiten Drehgelenks konstruktiv festgelegt ist und der Förderer somit nicht ohne konstruktive Änderungen an einer anderen Position, beispielsweise auf der gegenüberliegenden Seite der Verarbeitungseinrichtung, angebracht werden kann.

Die Schrift US 5,333,725 A beschreibt einen faltbaren Rahmen zur Aufnahme eines Förderbands. Der Rahmen besteht aus einem festen Basisrahmen und einem beweglichen Aufnahmerahmen. Der bewegliche Aufnahmerahmen ist durch ein erstes Universalgelenk am oberen Ende des Basisrahmens befestigt. Eine Stützstrebe, die am oberen Ende des Aufnahmerahmens befestigt ist, ist über ein zweites Drehgelenk mit dem unteren Ende des Basisrahmens verbunden. Ein mit dem Basis- und dem Aufnahmerahmen verbundener Aktuator bewirkt eine gleichzeitige Kipp- und Drehbewegung des Stützrahmens um die Achsen des ersten Drehgelenks. Hierdurch werden der Aufnahmerahmen und das darauf gestützte Förderband von einer Arbeitsposition in eine Transportposition bewegt. Nachteilig bei diesem bekannten Klappmechanismus ist weiterhin, dass die Gelenke derart angeordnet sind, dass immer eine kombinierte Drehbewegung des Förderbandes um seine Längsachse und gleichzeitig eine Klappbewegung des Förderbandes zu der Material-Verarbeitungseinrichtung erfolgt. Die beiden Bewegungen können nicht separat angesteuert und durchgeführt werden. Dadurch müssen die Gelenkverbindungen konstruktiv verändert werden, wenn das Förderband für verschiedene Material-Verarbeitungseinrichtungen vorgesehen sein soll oder wenn das gleiche Förderband an verschiedenen Positionen an der Material-Verarbeitungseinrichtung eingesetzt werden soll.

Aus US 2006/0088403 A1 ist eine Fördereinrichtung nach dem Oberbegriff des Anspruchs 1 bekannt. Insbesondere, ist ein Fahrzeug zum Fördern von Material bekannt, das mit einem länglichen Förderer ausgestattet ist. Der Förderer besteht aus einem Zuführungsabschnitt und einem Förderabschnitt, die über zwei Drehgelenke miteinander verbunden sind, sodass der Förderabschnitt um eine Querachse geneigt und eine Längsachse gedreht werden kann. Durch Drehung des Zuführungs- und Förderabschnitts um eine Hochachse mittels eines dritten Drehgelenks kann der Förderer in eine Ruhe- oder Transportposition entlang des Fahrzeugs ausgerichtet werden. Auch bei dieser Anordnung ergibt sich der Nachteil, dass die Drehrichtung um das dritte Drehgelenk nicht ohne konstruktive Maßnahmen verändert werden kann.

Die Schrift US 6,543,622 B1 beschreibt eine mobile Siebanlage mit einer Fördereinrichtung, deren Austragsförderer für den Transport zusammengeklappt und an das Chassis der Anlage angelegt werden können. Der Austragsförderer besteht aus einem Schwenkabschnitt, der um eine Hochachse drehbar ist, und einem Armabschnitt. Der Armabschnitt ist über ein Drehgelenk mit dem Schwenkabschnitt verbunden und kann um eine Querachse in eine vertikale Ausrichtung gedreht werden. Ein weiteres Drehgelenk ermöglich die Drehung des Förderers um eine Längsachse. Durch die Drehung um drei Achsen kann der Förderer für den Transport seitlich entlang des Chassis der Fördereinrichtung angelegt werden. Die Drehrichtung des zweiten Drehgelenks ist konstruktiv festgelegt, daher kann auch bei dieser Anordnung der Förderer nicht ohne konstruktive Änderungen an einer anderen Position, z.B. der gegenüberliegenden Seite des Chassis, angelegt werden. Es ist Aufgabe der Erfindung, einen robusten Klapp-Mechanismus für eine Fördereinrichtung bereitzustellen, der individuell an den jeweiligen Montageplatz der Fördereinrichtung angepasst werden kann.

Die Erfindung ist in den Ansprüchen 1 und 14 definiert. Die Aufgabe der Erfindung wird dadurch gelöst, dass der Gelenkabschnitt ein erstes und ein zweites Anschlusselement und ein Gelenkmittelteil aufweist, dass das erste Anschlusselement zur mittelbaren oder unmittelbaren Ankopplung an die Material-Verarbeitungseinrichtung und das zweite Anschlusselement zur mittelbaren oder unmittelbaren Ankopplung an den Transportabschnitt ausgerüstet ist, und dass die Anschlusselemente und der Gelenkmittelteil mittels der beiden Drehgelenke gekoppelt sind. Durch die in Reihe angeordneten Drehgelenke können die Drehung bzw. Schwenkung um die Längsachse einerseits sowie das Einklappen andererseits unabhängig voneinander angesteuert und durchgeführt werden. Damit kann der Bewegungsablauf individuell an die räumlichen Gegebenheiten der mobilen Material-Verarbeitungseinrichtung angepasst werden, ohne dass das Gelenkmittelteil oder die Anschlusselemente konstruktiv verändert werden müssen. Dies ermöglicht es beispielsweise, die Fördereinrichtung sowohl rechts als auch links an die mobile Material-Verarbeitungseinrichtung anzukoppeln und die Drehung bzw. Schwenkung um die Längsachse sowie das Einklappen in die erforderliche Richtung, beispielsweise in Fahrtrichtung der mobilen Material-Verarbeitungseinrichtung nach hinten, entsprechend einzustellen.

Eine Trennung der Dreh- und Schwenkbewegung um die Längsachse des Transportabschnitts auf der einen Seite und der Einklapp-Bewegung des Transportabschnitts auf der anderen Seite wird erfindungsgemäß dadurch erreicht, dass eine zweite Drehachse des zweiten Drehgelenks in Richtung der Längserstreckung des Transportabschnitts ausgerichtet ist und dass eine erste Drehachse des ersten Drehgelenks in einem Winkel zu der ersten Drehachse ausgerichtet ist. Durch die in Richtung der Längserstreckung des Transportabschnitts ausgerichtete zweite Drehachse kann dieser um seine Längsachse gedreht oder geschwenkt werden, ohne dass dies einen Einfluss auf die Klappbewegung des Transportabschnitts hat. Entsprechend kann der Transportabschnitt um die erste Drehachse des ersten Drehgelenks eingeklappt werden, ohne dass dadurch die Drehung oder Schwenkung um die Längsachse des Transportabschnitts beeinflusst wird. Die beiden Bewegungen können so separiert voneinander angesteuert und durchgeführt werden. Damit können die Bewegungen des Transportabschnitts optimal und ohne konstruktive Veränderungen an dem Gelenkabschnitt an die jeweilige Einbausituation der Fördereinrichtung angepasst werden.

Die Dreh- oder Schwenkbewegung des Transportabschnitts um seine Längsachse wird dadurch bewirkt, dass zwischen dem Gelenkmittelteil und dem zweiten Anschlusselement der erste Aktuator wirkt, derart, dass er den Transportabschnitt um eine Längsachse dreht oder schwenkt. Die Anordnung des ersten Aktuators zwischen dem Gelenkmittelteil und dem zweiten Anschlusselement ergibt einen Aufbau, der unabhängig von der Ankopplung der Fördereinrichtung an die Material-Verarbeitungseinrichtung ausgeführt werden kann. Die Anordnung kann somit ohne konstruktive Veränderungen bei vielen Förderbändern und Typen von Material-Verarbeitungseinrichtungen verwendet werden.

Um sowohl eine Rechts- wie auch eine Linksdrehung des Transportabschnitts erreichen zu können, ist gemäß der Erfindung vorgesehen, dass der erste Aktuator abhängig von der gewählten Anschlagart des Transportabschnitts an der Material-Verarbeitungseinrichtung in zwei verschiedenen Montagepositionen an dem Gelenkmittelteil befestigbar ist. Dies ermöglicht es beispielsweise, die Fördereinrichtung sowohl rechts als auch links an die mobile Material-Verarbeitungseinrichtung anzukoppeln und die Drehung bzw. Schwenkung um die Längsachse sowie das Einklappen in die erforderliche Richtung, beispielsweise in Fahrtrichtung der mobilen Material-Verarbeitungseinrichtung nach hinten, entsprechend einzustellen.

Mit der Erfindung ergibt sich insgesamt eine kompakte Bauweise mit einem geringen Teile- und Montageaufwand, wodurch die Herstell- und Montagekosten der Fördereinrichtung gegenüber bekannten Klappmechanismen deutlich reduziert werden können.

Eine einfache Montage der Fördereinrichtung an beiden Seiten der mobilen Material-Verarbeitungseinrichtung kann dadurch erreicht werden, dass das erste Anschlusselement eine mechanische Schnittstelle aufweist, mit der es lösbar wahlweise an einer der beiden Seiten der Material-Verarbeitungseinrichtung ankoppelbar ist.

Die Montage der Fördereinrichtung kann weiterhin dadurch vereinfacht werden, dass das zweite Anschlusselement eine mechanische Schnittstelle aufweist, mit der es lösbar mit dem Transportabschnitt koppelbar ist. Die Schnittstelle ermöglicht es, das gleiche Gelenkmittelteil bei Förderbändern mit unterschiedlich langen Transportabschnitten zu verwenden.

Eine einfache und gleichzeitig stark belastbare Gelenkverbindung kann dadurch erreicht werden, dass das Gelenkmitteilteil eine erste Gelenkaufnahme aufweist, die in Flucht zu einer zweiten Gelenkaufnahme des ersten Anschlusselements oder des zweiten Anschlusselements steht, und dass die Gelenkaufnahmen mit einem zweiten Lagerbolzen zur Bildung des ersten Drehgelenks miteinander gekoppelt sind.

Gemäß einer bevorzugten Erfindungsausgestaltung kann es vorgesehen sein, dass an dem Gelenkmittelteil eine erste Lagerhülse befestigt ist, deren Längsachse zum zweiten Anschlusselement hin ausgerichtet ist, dass an dem zweiten Anschlusselement eine zweite Lagerhülse befestigt ist, deren Längsachse zur Längsachse der ersten Lagerhülse fluchtet und dass ein Lagerbolzen in einer der Lagerhülsen drehbar gelagert ist und in der anderen Lagerhülse nicht drehbar befestigt ist. Es wird so ein Drehgelenk geschaffen, um dessen Drehachse die Längsachse des vorderen Transportabschnitts gedreht oder geschwenkt werden kann. Durch geeignete Wahl der Lagerhülsen und des Lagerbolzens kann das Drehgelenk leichtgängig und dennoch stabil ausgeführt werden, so dass auch hohe, auf den Transportabschnitt der Fördereinrichtung einwirkende Querkräfte sicher abgefangen werden können. Das Drehlager ist kostengünstig herstellbar und kann einfach montiert werden.

Ein einfacher Aufbau des Gelenkabschnittes kann dadurch erreicht werden, dass das Gelenkmitteilteil die beiden Drehgelenke aufnimmt und dass die Drehachsen der beiden Drehgelenke zueinander im Winkel, vorzugsweise von 90°, angeordnet sind. Die Anordnung der Drehgelenke in einem Winkel ermöglicht die Durchführung der Dreh- bzw. Schwenkbewegung um die Längsachse des Transportabschnitts sowie dessen Einklapp-Bewegung. Sind die beiden Drehachsen in einem Winkel von 90° angeordnet, können viele Positionen des Transportabschnitts als seine Transportposition eingestellt werden. Dabei ermöglicht eine geeignete Ausrichtung der beiden Drehachsen, die Dreh- und Schwenkbewegung um die Längsachse des Transportabschnitts und die Einklapp-Bewegung voneinander zu separieren und somit einzeln und unabhängig voneinander ansteuern zu können.

Ist es vorgesehen, dass dem zweiten Drehgelenk ein erster und dem ersten Drehgelenk ein zweiter Aktuator zugeordnet ist, so können die Dreh- und Schwenkbewegung um die Längsachse des Transportabschnitts einerseits und die Einklapp-Bewegung des Transportabschnitts andererseits unabhängig voneinander angesteuert werden.

Bevorzugt kann es vorgesehen sein, dass das Gelenkmittelteil ein Ankoppelelement aufweist, das mit dem zweiten Aktuator verbunden ist, um den Transportabschnitt einzuklappen. Der zweite Aktuator kann so einfach und schnell mit dem Gelenkmittelteil verbunden werden. Durch den zweiten Aktuator kann dann das Gelenkmittelteil um das erste Drehgelenk eingeklappt werden. Die Ankopplung des zweiten Aktuators an das Gelenkmittelteil ist vorteilhaft, da dieses unabhängig von dem vorgesehenen Transportabschnitt immer gleich ausgeführt ist und somit ein einheitlicher Aufbau beispielsweise verschieden langer Förderbänder erreicht werden kann.

Gemäß einer bevorzugten Erfindungsgestaltung kann es vorgesehen sein, dass das Gelenkmittelteil ein erstes und ein zweites Ankoppelelement aufweist, oder dass das Gelenkmittelteil ein Ankoppelelement aufweist, das derart angeordnet ist, dass es wahlweise links- oder rechtsseitig des Gelenkmittelteils mit dem zweiten Aktuator koppelbar ist. Das erste und das zweite Ankoppelelement können beispielsweise gegenüberliegend an den Seiten des Gelenkmittelteils angeordnet sein. In Abhängigkeit von der gewünschten Klapprichtung kann der zweite Aktuator dann an das erste oder das zweite Ankoppelelement angeschlossen werden. Entsprechend kann die Klapprichtung auch durch ein Ankoppelelement, das wahlweise links- oder rechtsseitig des Gelenkmittelteils mit dem zweiten Aktuator koppelbar ist, gewählt werden.

Eine exakte Ausrichtung des Transportabschnitts der Fördereinrichtung, insbesondere in seiner Arbeitsposition, kann dadurch erreicht werden, dass zwischen dem Gelenkmittelteil und einem der Anschlusselemente ein Anschlagelement zur Begrenzung der Dreh-/Schwenk- oder Klappbewegung des Transportabschnitts wirksam ist.

Vorzugsweise kann es dabei vorgesehen sein, dass die Ausrichtung des Transportabschnitts um dessen Längsachse mittels eines Justierelements (einstellbares Anschlagelement) einstellbar ist. Die Ruhepositionen des Transportabschnitts können so exakt vorgegeben werden.

Eine Arretierposition des zweiten Drehgelenks kann dadurch eingestellt werden, dass zumindest ein Arretierstift an dem Gelenkmittelteil festlegbar ist, dass das an dem zweiten Anschlusselement angeordnete Anschlagelement in der arretierten Position des zweiten Drehgelenks zumindest in einer Drehrichtung des zweiten Drehgelenks an dem Arretierstift anliegt und dass die Position des Anschlagelements gegenüber dem zweiten Anschlusselement einstellbar ist. Zum Drehen bzw. Schwenken und Einklappen des Transportabschnitts kann der Arretierstift entfernt und damit die Drehbewegung freigegeben werden.

Die Ausrichtung des ersten Drehgelenks in der Arbeitsposition des Transportabschnitts kann dadurch festgelegt werden, dass zwischen dem Gelenkabschnitt, vorzugsweise dem Gelenkmittelteil, und der Material-Verarbeitungseinrichtung eine Stützstrebe wirksam ist. Die Stützstrebe kann dazu mit einer Seite beispielsweise an dem Basisabschnitt der Fördereinrichtung festgelegt sein und nach Erreichen der Arbeitsposition mit dem Gelenkabschnitt verbunden werden. Die Stützstrebe verhindert, dass sich der Transportabschnitt bei auftretenden Querkräften, beispielsweise entgegen der Stellwirkung des zweiten Aktuators, unbeabsichtigt um die erste Drehachse dreht.

Die Erfindung wird im Folgenden anhand eines in den Zeichnungen dargestellten Ausführungsbeispiels näher erläutert.

Es zeigen:
- Fig. 1: eine mobile Material-Verarbeitungseinrichtung in einer Arbeitsposition,
- Fig. 2: die in Figur 1 gezeigte mobile Material-Verarbeitungseinrichtung in einer Transportposition,
- Fig. 3: in einer perspektivischen Explosionsdarstellung einen Gelenkabschnitt einer Fördereinrichtung,
- Fig. 4: einen Gelenkabschnitt mit montierten Aktuatoren in einer perspektivischen Darstellung in einer Arbeitsposition der Fördereinrichtung und
- Fig. 5: den in Figur 4 gezeigten Gelenkabschnitt in einer Transportposition.

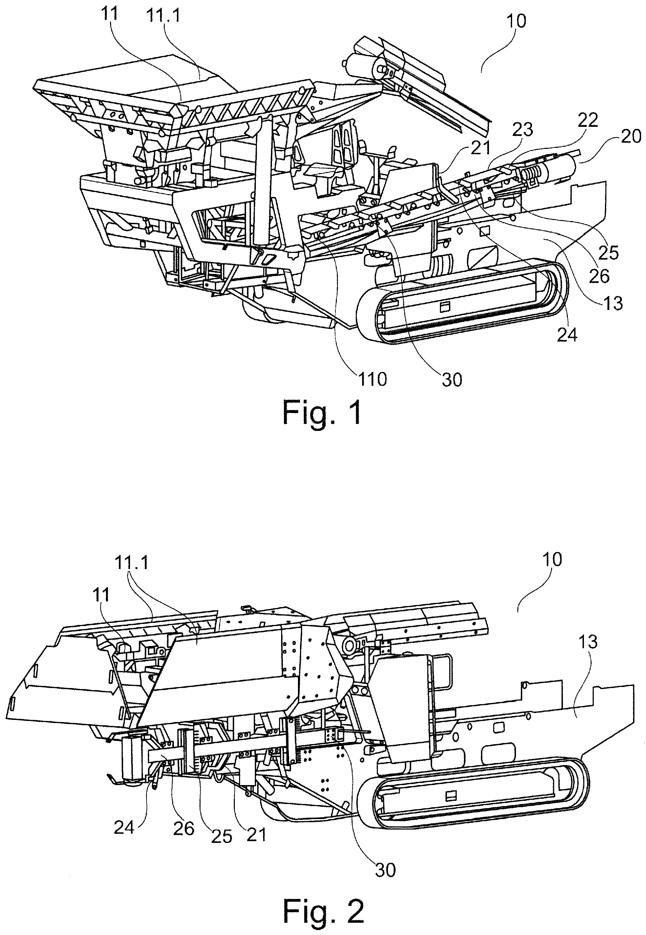

Figur 1 zeigt eine mobile Material-Verarbeitungseinrichtung 10 in einer Arbeitsposition. Die Material-Verarbeitungseinrichtung 10 dient der Zerkleinerung von Abraummaterial, welches der Material-Verarbeitungseinrichtung 10 über einen Aufgabetrichter 11 mit Trichterwänden 11.1 zugeführt wird. Das Material wird über eine Fördereinrichtung 20 abtransportiert. Die Fördereinrichtung 20 ist über einen Basisabschnitt 110 mit einem Chassis 13 der mobilen Material-Verarbeitungseinrichtung 10 verbunden. Ein Transportabschnitt 24 der Fördereinrichtung 20 ist über einen Gelenkabschnitt 30 an den Basisabschnitt 110 angekoppelt. Ein Gurt 23 der Fördereinrichtung 20 ist entlang eines Trageprofils 26 des Transportabschnittes 24 geführt. Dazu ist er auf Rollen 22 gelagert und seitlich durch seitliche Gurtführungen 21 sowie auf der Unterseite der Fördereinrichtung 20 durch untere Gurtführungen 25 gehalten.

Der Basisabschnitt 110 ist derart beweglich mit dem Chassis 13 verbunden, dass die Neigung der Fördereinrichtung 20 eingestellt werden kann.

Figur 2 zeigt die in Figur 1 gezeigte mobile Material-Verarbeitungseinrichtung 10 in einer Transportposition. In dieser Transportposition sind die Trichterwände 11.1 des Aufgabetrichters 11 nach unten geklappt und die Rückführung 12 ist eingezogen. Dadurch wird die Höhe der Material-Verarbeitungseinrichtung 10 gegenüber der Arbeitsposition deutlich verringert.

Der Transportabschnitt 24 der Fördereinrichtung 20 ist um seine Längsachse gedreht und an das Chassis 13 der mobilen Material-Verarbeitungseinrichtung 10 herangeklappt. Dazu wird der Basisabschnitt 110 und damit die gesamte Fördereinrichtung 20 zunächst so weit abgesenkt, dass dieses bei waagerecht stehender mobiler Material-Verarbeitungseinrichtung 10 in seiner Längserstreckung zumindest annähernd waagerecht von Seite der mobilen Material-Verarbeitungseinrichtung 10 hin abstehend ausgerichtet ist. Anschließend wird der Transportabschnitt 24 an dem Gelenkabschnitt 30 um seine Längsachse gedreht oder geschwenkt und an das Chassis 13 herangeklappt. Vorzugsweise sind diese beiden Bewegungsabläufe so aufeinander abgestimmt, dass sie gleichzeitig ablaufen. Alternativ kann zunächst die Drehung oder Schwenkung um die Längsachse und anschließend das Einklappen an das Chassis 13 erfolgen.

Durch das Einklappen der Fördereinrichtung 20 sowie die Drehung bzw. Schwenkung um seine Längsachse werden die seitlichen Abmessungen der mobilen Material-Verarbeitungseinrichtung 10 so weit reduziert, dass diese auf öffentlichen Straßen transportiert werden kann.

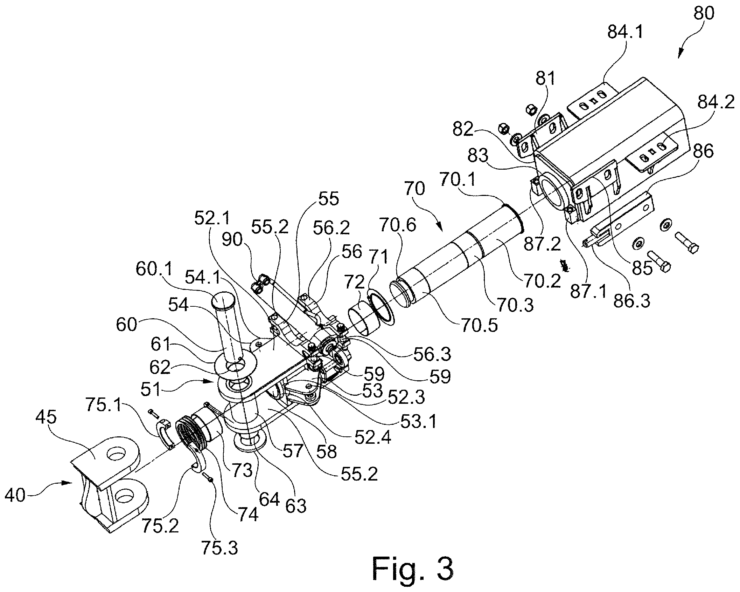

Figur 3 zeigt in einer perspektivischen Explosionsdarstellung den Gelenkabschnitt 30 der Fördereinrichtung 20.

Ein erstes Anschlusselement 40 ist zum Anschluss des Gelenkabschnitts 30 an den Basisabschnitt 110 ausgebildet. Dem ersten Anschlusselement 40 nachfolgend ist ein Gelenkmittelteil 50 angeordnet, dem ein Lagerbolzen 70 zugeordnet ist. Ein zweites Anschlusselement 80 ist zum Anschluss des Gelenkabschnitts 30 an das Trageprofil 26 des Transportabschnitts 24 der Fördereinrichtung 20 ausgelegt.

Dem Gelenkmittelteil 50 zugewandt weist das erste Anschlusselement 40 eine erste Gelenkaufnahme 45 auf. Das Anschlusselement weist weiterhin Montagebohrungen zur Verbindung des ersten Anschlusselements 40 mit dem Basisabschnitt 110 auf.

Das Gelenkmittelteil 50 weist eine obere Platte 52.1 und eine untere Platte 52.2 auf. Die beiden Platten 52.1, 52.2 sind durch einen Quersteg 52.3 sowie einen ersten und einen zweiten Befestigungssteg 55, 56 miteinander in einem Abstand verbunden. Auf der dem ersten Anschlusselement 40 zugewandten Seite des Gelenkmittelteils 50 ist eine zweite Gelenkaufnahme 51 angeordnet. Diese umfasst eine dritte Lagerhülse 57. Die dritte Lagerhülse 57 ist in zwei gegenüberliegenden, fluchtenden Bohrungen in der oberen und der unteren Platte 52.1, 52.2 gehalten.

Zwischen dem Quersteg 52.3 und dem ersten Befestigungssteg 55 sind seitlich abstehend und gegenüberliegend jeweils ein Ankoppelelement 53, 54 angeordnet und an diesen befestigt. Die Ankoppelelemente 53, 54 sind jeweils durch zwei beabstandet angeordnete Ausleger 53.1, 54.1 gebildet. In diesen Auslegern 53.1, 54.1 sind außen jeweils zwei zueinander fluchtende Bohrungen angeordnet.

Die Befestigungsstege 55, 56 weisen jeweils zwei gegenüberliegende, zur Seite des Gelenkmittelteils 50 hin ausgerichtete und geöffnete Aufnahmen 55.2, 55.3, 56.2, 56.3 auf. Die Aufnahmen 55.2, 55.3, 56.2, 56.3 sind U-förmig ausgebildet. In den gegenüberliegenden Schenkeln der Aufnahmen 55.2, 55.3, 56.2, 56.3 sind Bohrungen eingebracht. Die Aufnahmen 55.2, 55.3, 56.2, 56.3 können durch Lagerbolzen 59, welche in die Bohrungen eingebracht werden, verschlossen werden.

Zwischen der oberen und der unteren Platte 52.1, 52.2 ist eine erste Lagerhülse 58 angeordnet. Die Lagerhülse 58 ist in Hülsendurchbrüchen 52.4 in dem Quersteg 52.3 sowie dem ersten und dem zweiten Befestigungssteg 55, 56 gehalten. Die Lagerhülse 58 ist mit ihrer Mittellängsachse zu dem Lagerbolzen 70 und dem zweiten Anschlusselement 80 hin ausgerichtet.

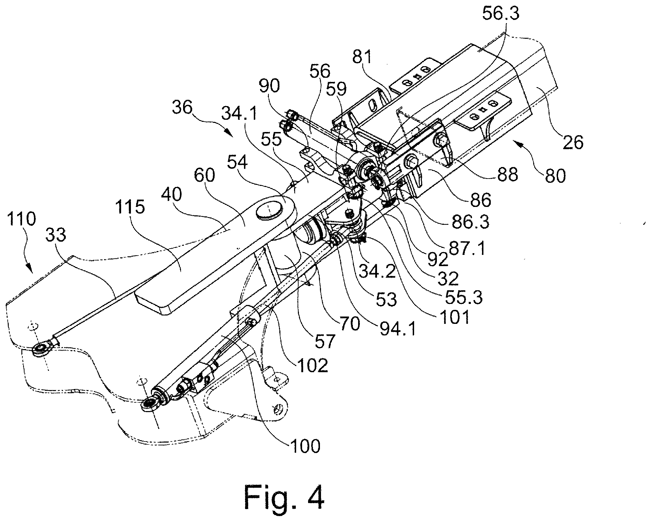

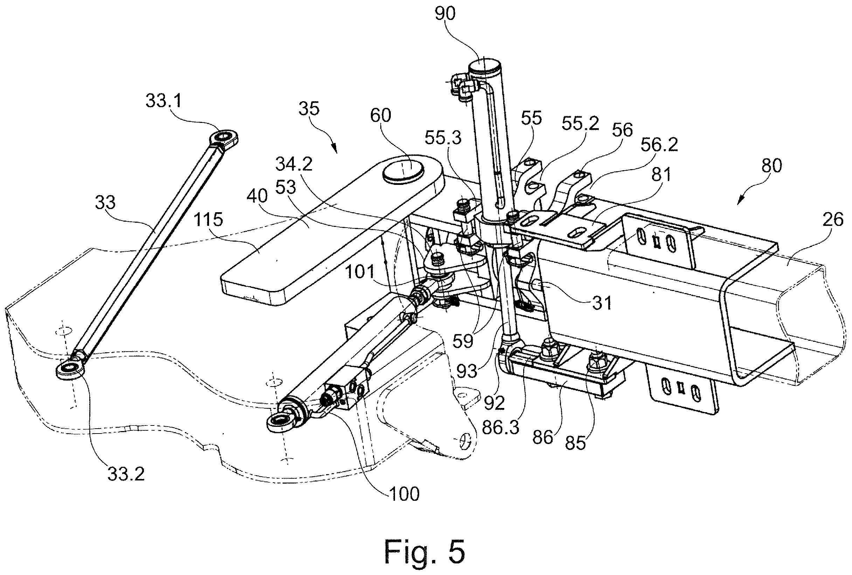

Ein erster Aktuator 90 ist beweglich in zwei auf einer Seite des Gelenkmittelteils 50 angeordneten Aufnahmen 55.3, 56.3 gelagert, wie dies näher zu den Figuren 4 und 5 beschrieben ist.

In Flucht zu der dritten Lagerhülse 57 der zweiten Gelenkaufnahme 51 ist ein zweiter Lagerbolzen 60 dargestellt. An den zweiten Lagerbolzen 60 ist endseitig ein Bolzenflansch 60.1 angeformt. Gegenüberliegend zum Bolzenflansch 60.1 ist eine erste Splintbohrung 60.2 in den zweiten Lagerbolzen 60 eingebracht. Zwischen dem zweiten Lagerbolzen 60 und der dritten Lagerhülse 57 sind ein erstes Axiallager 61 und ein teilweise verdeckt angeordnetes erstes Radiallager 62 dargestellt. Gegenüberliegend zu der Lagerhülse 57 sind ein zweites Radiallager 63 und eine Befestigungsscheibe 64 angeordnet.

Der Lagerbolzen 70 ist mit seiner Mittellängsachse fluchtend zu der ersten Lagerhülse 58 ausgerichtet. Endseitig ist ein Anschlag 70.1 an den Lagerbolzen 70 angeformt. Dem Anschlag 70.1 folgen ein Einpressabschnitt 70.2, ein erster Lagerabschnitt 70.3, ein Mittelabschnitt 70.4, ein zweiter Lagerabschnitt 70.5, eine Nut 70.6 und ein Abschlussflansch 70.7 des Lagerbolzens 70. Zwischen dem Lagerbolzen 70 und dem Gelenkmittelteil 50 sind ein zweites Axiallager 71 und ein drittes Radiallager 72 gezeigt. Auf der gegenüberliegenden Seite des Gelenkmittelteils 50 sind ein viertes Radiallager 73, Distanzscheiben 74 sowie eine erste und eine zweite Halbschale 75.1, 75.2 eines mit Hilfe von Schrauben 75.3 montierbaren Klemmrings angeordnet.

Das zweite Anschlusselement 80 weist ein U-Profil als Grundkörper auf. Eine zweite Lagerhülse 83 ist innerhalb des U-Profils geführt und in einem Hülsendurchbruch einer Abschlussplatte 82 gehalten. Die zweite Lagerhülse 83 ist mit ihrer Mittellängsachse zu dem Lagerbolzen 70 hin ausgerichtet. Seitlich sind Montageplatten 81, 85 beabstandet an dem U-Profil 84 befestigt. Im Anschluss an die Montageplatten 81, 85 sind zwei Konsolen 84.1, 84.2 an dem U-Profil 84 angebracht. Auf einer Seite des U-Profils ist ein Zapfenträger 86 angeordnet. IDer Zapfenträger 86 ist in der vorliegenden Ausrichtung an der zweiten Montageplatte 85, befestigt. Zum Gelenkmittelteil 50 hin ist ein Zapfen 86.3 an dem Zapfenträger 86 befestigt. Im Übergang von dem U-Profil zu der Anschlussplatte 82 sind gegenüberliegend zwei Anschlagstege 87.1, 87.2 angeordnet.

Zur Montage des Gelenkabschnittes 30 wird der Lagerbolzen 70 von der Seite des Transportabschnitts 24 der Fördereinrichtung 20 aus in die zweite Lagerhülse 83 eingeführt und darin mit seinem Einpressabschnitt 70.2 festgelegt. Das dritte und das vierte Radiallager 72, 73 werden in die erste Lagerhülse 58 eingeführt. Das zweite Axiallager 71 wird auf den Lagerbolzen 70 bis zur zweiten Lagerhülse 83 aufgeschoben. Anschließend wird das Gelenkmittelteil 50 mit seiner ersten Lagerhülse 58 derart auf den Lagerbolzen 70 aufgeschoben, dass der erste Lagerabschnitt 70.3 des Lagerbolzens 70 im Bereich des dritten Radiallagers 72 und der zweite Lagerabschnitt 70.5 im Bereich des vierten Radiallagers 73 drehbar gelagert ist. Montiert ragt der Lagerbolzen 70 mit seiner Nut 70.6 und dem Abschlussflansch 70.7 aus der ersten Lagerhülse 58. Er kann so mit Hilfe der beiden Halbschalen 75.1, 75.2, welche in die Nut 70.6 eingebracht und miteinander verbunden werden, axial festgelegt werden. Zuvor wird das axiale Spiel des Lagerbolzens 70 mit Hilfe der Distanzscheiben 74, welche zwischen der ersten Lagerhülse 58 und den Halbschalen 75.1, 75.2 angeordnet werden, eingestellt werden. Mit dieser Anordnung wird eine Gelenkverbindung erhalten, mit der das zweite Anschlusselement 80 gegenüber dem Gelenkmittelteil 50 um seine Längsachse gedreht oder geschwenkt werden kann. Zur weiteren Montage werden das erste Radiallager 62 und das zweite Radiallager 63 endseitig in die dritte Lagerhülse 57 eingeführt und dort festgelegt. Das erste Axiallager 61 wird fluchtend zu der Öffnung der dritten Lagerhülse 57 aufgelegt. Anschließend wird das Gelenkmittelteil 50 derart zwischen Flansche des ersten Anschlusselements 40 geschoben, dass die erste Gelenkaufnahme 45 und die zweite Gelenkaufnahme 51 zueinander fluchten. Die beiden Gelenkaufnahmen 45, 51 können jetzt durch Einführen des zweiten Lagerbolzens 60 klappbar verbunden werden. Der zweite Lagerbolzen 60 wird durch einen Splint axial festgelegt.

Der Gelenkabschnitt 30 enthält somit zwei in Reihe zueinander angeordnete Gelenke, deren Drehachsen in einem Winkel zueinander angeordnet sind. Dabei ermöglicht das zwischen dem ersten Anschlusselement 40 und dem Gelenkmittelteil 50 angeordnete Gelenk ein Einklappen des an dem zweiten Anschlusselement 80 angeschlossenen Transportabschnitts 24 der Fördereinrichtung 20, während das zwischen dem Gelenkmittelteil 50 und dem zweiten Anschlusselement 80 angeordnete Gelenk eine Drehung oder Schwenkung des Transportabschnitts 24 um seine Längsachse ermöglicht. Das Gelenkmittelteil 50 ist so aufgebaut, dass sowohl das Einklappen wie auch das Drehen bzw. Schwenken des Transportabschnitts 24 um seine Längsachse in jeweils beide Richtungen möglich ist. Die Fördereinrichtung 20 kann so an jeder Seite der mobilen Material-Verarbeitungseinrichtung angebracht und geeignet eingeklappt werden.

Wie Figur 3 zeigt, ist die erste Lagerhülse 58 ist in dem ersten Hülsendurchbruch 52.4 befestigt und kann mit den ersten Befestigungsstegen 55, 56 verbunden sein. Die zweite Lagerhülse 83 ist in Hülsendurchbrüchen in der Anschlussplatte 82 sowie einem zweiten Quersteg 89 gehalten und mit diesen fest verbunden. Zusammen mit dem stabil ausgeführten Lagerbolzen 70 ergibt sich so eine stark belastbare und gleichzeitig drehbare Verbindung zwischen dem Gelenkmittelteil 50 und dem zweiten Anschlusselement 80.

Zwischen dem ersten Anschlusselement 40 und dem Gelenkmittelteil 50 ist somit ein erstes Drehgelenk 35 und zwischen dem Gelenkmittelteil 50 und dem zweiten Anschlusselement 80 ein zweites Drehgelenk 36 ausgebildet. Die Drehachsen der beiden Drehgelenke 35, 36 sind in einem Winkel zueinander ausgerichtet. Der Winkel beträgt vorzugsweise 90°.

Das erste Drehgelenk 35 ermöglicht somit ein Einklappen des Gelenkmitteteils 50 mit dem daran angekoppelten zweiten Anschlusselement 80 und damit dem Transportabschnitt 24 der Fördereinrichtung 20. Der Transportabschnitt 24 der Fördereinrichtung 20 kann so an das Chassis 13 der Material-Verarbeitungseinrichtung 10 herangeklappt werden, wie dies in Figur 2 gezeigt ist. Die Drehung um die Drehachse des ersten Drehgelenks 35 kann, abhängig von dem vorgesehenen Antrieb, im oder entgegen dem Uhrzeigersinn erfolgen. Auch der Drehwinkel kann frei gewählt werden. Dadurch wird es möglich, die Fördereinrichtung 20 an einer beliebigen Seite der mobilen Material-Verarbeitungseinrichtung 10 zu montieren und dort zum Transport einzuklappen.

Die Drehachse des zweiten Drehgelenks 36 verläuft in Richtung der Längserstreckung der zweiten Lagerhülse 83. Die Drehachse des zweiten Drehgelenks 36 ist damit in Richtung der Längserstreckung des zweiten Anschlusselements 80 und eines daran angeschlossenen Transportabschnitts 24 der in Figur 1 und 2 gezeigten Fördereinrichtung 20 ausgerichtet. Das zweite Drehgelenk 36 ermöglicht somit ein Drehen oder Schwenken des zweiten Anschlusselements 80 und damit des Transportabschnitts 24 der Fördereinrichtung 20 um deren Längsachsen. Die Drehung um die Drehachse des zweiten Drehgelenks 36 kann dabei, abhängig von dem vorgesehenen Antrieb, im oder entgegen dem Uhrzeigersinn erfolgen. Auch der Drehwinkel kann frei gewählt werden. Damit kann der Transportabschnitt 24 in der Transportstellung beispielsweise mit seiner Oberseite oder mit seiner Unterseite zu dem Chassis 13 hin ausgerichtet an das Chassis 13 herangeklappt werden oder es kann die Seite, an welcher die Fördereinrichtung 20 an die Material-Verarbeitungseinrichtung 10 angebracht wird, frei gewählt werden.

Figur 4 zeigt einen Gelenkabschnitt 30 mit montierten Aktuatoren 90, 100 in einer perspektivischen Darstellung in einer Arbeitsposition der Fördereinrichtung 20.

Das erste Anschlusselement 40 ist mit einem Anschlussabschnitt 115 des Basisabschnittes 110 durch entsprechende Befestigungselementen (Schrauben) lösbar verbunden. Mit dem Basisabschnitt 110 ist eine Stützstrebe 33 lösbar verbunden. An ihrem zweiten Ende ist die Stützstrebe 33 an dem zweiten Ankoppelelement 54 befestigt. Gegenüberliegend zur Stützstrebe 33 verbindet ein zweiter Aktuator 100, der als Hydraulikzylinder ausgeführt ist, den Basisabschnitt 110 mit dem Gelenkmittelteil 50. Der erste Aktuator 90 ist ebenfalls als Hydraulikzylinder ausgeführt. Er weist einen ersten Gelenkkopf 92 und eine in der gewählten Darstellung eingefahrene, in Figur 5 gezeigte erste Kolbenstange 93 auf. Der erste Aktuator 90 ist mittels einer Angel 94 gehalten. Seitlich abstehende Zapfen 94.1 sind in der zweiten Aufnahme 55.3 des ersten Befestigungsstegs 55 und in der vierten Aufnahme 56.3 des zweiten Befestigungsstegs 56 drehbar gelagert. Dazu sind die gegenüberliegend an der Angel 94 angebrachten Zapfen 94.1 in die zweite bzw. vierte U-förmige Aufnahme 55.3, 56.3 eingeführt und die Öffnungen der zweiten und vierten Aufnahme sind durch Lagerbolzen 59 verschlossen. Der erste Gelenkkopf 92 ist mit einem Durchgangsloch auf den Zapfen 86.3 des Zapfenträgers 86 gesteckt und dort durch eine Schraube gehalten. Der erste Aktuator 90 ist somit seitlich und quer zur Drehachse des zweiten Drehgelenks 36 angeordnet.

Das U-Profil 84 des zweiten Anschlusselements 80 ist über geeignete Befestigungsmittel (Schrauben) lösbar mit dem Trageprofil 26 des Transportabschnitts 24 der Fördereinrichtung 20 verbunden.

An dem ersten Anschlagsteg 87.1 ist ein einstellbares Anschlagelement 32, in der vorliegenden Ausführungsform in Form einer Schraube, angebracht.

Durch Einziehen der zweiten Kolbenstange 102 des zweiten Aktuators 100 wird das Gelenkmittelteil 50 um die Drehachse des ersten Drehgelenks 35 gedreht, wie dies in Figur 5 gezeigt ist. Durch Ausfahren der ersten Kolbenstange 93 des ersten Aktuators 90 wird das zweite Anschlusselement 80 um die Drehachse des zweiten Drehgelenks 36 gedreht, wie auch dies in Figur 5 gezeigt ist. Durch diese Bewegungsabläufe kann das Trageprofil 26 und damit der an dem Trageprofil 26 befestigte Transportabschnitt 24 der Fördereinrichtung 20 um die Drehachse des ersten Drehgelenks 35 eingeklappt und um die Drehachse des zweiten Drehgelenks 36 gedreht bzw. geschwenkt werden.

Figur 5 zeigt den in Figur 4 gezeigten Gelenkabschnitt 30 in einer Transportposition der Fördereinrichtung 20.

Die Stützstrebe 33 ist von dem zweiten Ankoppelelement 54 gelöst. Die zweite Kolbenstange 102 des zweiten Aktuators 100 ist eingefahren. Die erste Kolbenstange 93 des ersten Aktuators 90 ist ausgefahren.

Durch das Einfahren der zweiten Kolbenstange 102 des zweiten Aktuators 100 ist das Gelenkmittelteil 50 mit dem angekoppelten zweiten Anschlusselement 80 um die Drehachse des ersten Drehgelenks 35 gedreht.

Durch das Ausfahren der ersten Kolbenstange 93 des ersten Aktuators 90 ist das zweite Anschlusselement 80 um seine Längsachse gedreht oder geschwenkt. Da der erste Aktuator an seinem Gehäuse über die Angel 94 an dem Gelenkmittelteil 50 ortsfest gehalten ist, dreht sich dabei der in der ersten Lagerhülse 58 des Gelenkmittelteils 50 drehbar gelagerte Lagerbolzen 70 und damit das angeschlossene zweite Anschlusselement 80. Der erste Aktuator 90 dreht sich dabei selbst um eine durch die Angelzapfen 94.1 gebildete Drehachse.

Zum Einklappen des Transportabschnitts 24 von seiner Arbeitsposition in seine Transportposition wird zunächst die Neigung der Fördereinrichtung 20 eingestellt. Dazu wird der Basisabschnitt 110 um ein ihm zugeordnetes Lager verschwenkt und damit die Fördereinrichtung nach unten gekippt. Die Einstellung der Neigung erfolgt über einen nicht dargestellten weiteren Aktuator, beispielsweise einen weiteren Hydraulikzylinder. Nachdem die Neigung eingestellt und die Stützstrebe 33 gelöst ist wird der erste Aktuator 90 ausgefahren und der zweite Aktuator 100 eingefahren. Die beiden Bewegungen können dabei zeitgleich oder nacheinander erfolgen. Dadurch wird das an dem zweiten Anschlusselement 80 angebrachte Trageprofil 26 und somit der Transportabschnitt 24 der Fördereinrichtung um seine Längsachse gedreht bzw. geschwenkt und zu dem Chassis 13 der mobilen Material-Verarbeitungseinrichtung 10 eingeklappt.

Zum Ausklappen des Transportabschnitts 24 von seiner Transportposition in die Arbeitsposition wird der erste Aktuator 90 eingefahren und der zweite Aktuator 100 ausgefahren. Dadurch wird das Gelenkmittelteil 50 wieder um die erste Drehachse gedreht und das zweite Anschlusselement 80 und damit der Transportabschnitt 24 um seine Längsachse gedreht oder geschwenkt. Um den Transportabschnitt 24 in seiner Arbeitsposition exakt auszurichten wird anschließend die Stützstrebe 33 montiert, wie dies in Figur 4 gezeigt ist. Die Stützstrebe 33 nimmt weiterhin auf den Transportabschnitt 24 einwirkende Querkräfte auf, so dass der Transportabschnitt 24 nicht entgegen der Einstellung des zweiten Aktuators 100 um die erste Drehachse 35 aus seiner Arbeitsposition gedreht wird. An dem zweiten Befestigungssteg 56 des Gelenkmittelteils 50 ist ein Arretierstift 31 festgelegt. An diesen schlägt beim Drehen des zweiten Anschlusselements 80 in die Arbeitsposition das in Figur 4 gezeigte Anschlagelement 32 an. Das Anschlagelement 32 kann in seiner Position justiert werden. Damit ist die exakte Position des Transportabschnitts 24 vorgegeben.

Die Baugruppen des Gelenkabschnitts 30 sind symmetrisch auf beiden Seiten des Gelenkabschnitts 30 angeordnet. Damit können die Komponenten, welche die Bewegung des Transportabschnitts 24 bewirken, an beiden Seiten angebracht werden. Wird beispielsweise der zweite Aktuator 100 mit dem zweiten Ankoppelelement 54 verbunden, so kann das Gelenkmittelteil 50 und damit der Transportabschnitt 24 der Fördereinrichtung in die entgegengesetzte Richtung um die erste Drehachse 35 eingeklappt werden als bei der dargestellten Ausführung, bei der der zweite Aktuator 100 mit dem ersten Ankoppelelement 53 verbunden ist. Entsprechend kann der erste Aktuator 90 mit seinen Angelzapfen 94.1 in der gegenüberliegenden ersten und zweiten Aufnahme 55.2, 56.2 festgelegt und der Zapfenträger 86 an der gegenüberliegenden ersten Montageplatte 81 befestigt werden. Dadurch wird das zweite Anschlusselement 80 und damit der angeschlossene Transportabschnitt 24 in die entgegengesetzte Richtung um seine Längsachse gedreht bzw. geschwenkt, als dies bei dem in Figur 5 gezeigten Ausführungsbeispiel der Fall ist. Auf diese Weise kann die Fördereinrichtung 20 unter Verwendung eines gleichen Gelenkabschnitts 30 beispielsweise rechts oder links an der Material-Verarbeitungseinrichtung 10 angebracht werden. Weiterhin kann gewählt werden, ob der Transportabschnitt 24 mit seiner Oberseite oder seiner Unterseite zum Chassis hin ausgerichtet eingeklappt wird. Ein weiterer Vorteil ergibt sich aus der unabhängigen Ansteuerung der beiden Drehbewegungen, wie sie sich aus den verwendeten unabhängigen Aktuatoren 90, 100 und den gewählten Drehachsen der beiden Drehgelenke 35, 36 ergibt. So kann frei gewählt werden, wie weit der Transportabschnitt 24 um das erste Drehgelenk 35 an das Chassis 13 herangeklappt wird. Weiterhin kann frei gewählt werden, wie stark der Transportabschnitt 24 um seine Längsachse gedreht oder geschwenkt wird. Damit kann die Bewegung optimal an die Platzverhältnisse, wie sie sich aus dem Aufbau der Material-Verarbeitungseinrichtung 10 ergeben, angepasst werden. Der gleiche Gelenkabschnitt 30 kann so auch für verschiedene Material-Verarbeitungseinrichtungen 10 verwendet werden.

Durch die bewegliche Lagerung des Basisabschnitts 110 kann die Neigung der Fördereinrichtung 20 und damit die Förderhöhe eingestellt werden. Ebenfalls eingestellt werden kann die Neigung des Basisabschnitts 110 bei eingeklapptem Transportabschnitt 24. Vorzugsweise ist in der Transportstellung der Basisabschnitt 110 bei horizontal stehender Material-Verarbeitungseinrichtung horizontal ausgerichtet. Er kann jedoch auch mit einer Neigung eingestellt werden, wodurch der Transportabschnitt 24 etwas höher oder niedriger an der Seite des Chassis 13 anliegt. Dabei kann durch den frei wählbaren Drehwinkel um die zweite Drehachse 36 der Transportabschnitt 24 weiterhin flächig an der Seite des Chassis 13 angelegt werden. Auch hierdurch kann die Position des Transportabschnitts 24 optimal an die räumlichen Gegebenheiten einer mobilen Material-Verarbeitungseinrichtung 10 angepasst werden.

Eine der Drehachsen der beiden Drehgelenke 35, 36 ist vorteilhafter Weise zumindest annähernd in Richtung der Längsachse des Transportabschnitts 24 der Fördereinrichtung ausgerichtet. Im gezeigten Ausführungsbeispiel kann die Drehachse des zweiten Drehgelenks 36 direkt auf der Längsachse des Transportabschnitts 24 liegend oder parallel zu der Längsachse ausgerichtet sein. Im ersten Fall wird der Transportabschnitt 24 um seine Längsachse gedreht, im zweiten Fall um diese geschwenkt. Damit können die Dreh- bzw. Schwenkbewegung um die Längsachse und das Einklappen separat und unabhängig voneinander eingestellt und durchgeführt werden. Die Transportposition kann so optimal an die räumlichen Gegebenheiten der Material-Verarbeitungseinrichtung 10 angepasst werden. Dies ist bei bekannten Gelenkanordnungen mit schräg zur Längsachse des Transportabschnitts 24 oder des zweiten Anschlusselements 80 ausgerichteten Drehachsen nicht möglich, da hier eine Drehung um eine der Drehachsen immer eine kombinierte Dreh- bzw. Schwenkbewegung und Einklapp-Bewegung ergibt, die nicht unabhängig voneinander einstellbar sind.

## Patentansprüche

1. Fördereinrichtung (20) für eine Material-Verarbeitungseinrichtung (10), mit einem Basisabschnitt (110) und einem Transportabschnitt (24), wobei der Basisabschnitt (110) zur Ankopplung an die Material-Verarbeitungseinrichtung (10) ausgebildet ist und über einen Gelenkabschnitt (30) mit dem Transportabschnitt (24) derart verbunden ist, dass der Transportabschnitt (24) zwischen einer Arbeitsposition und einer Transportposition auf zumindest einem Teil des Verstellweges des Transportabschnitts (24) mittels eines ersten und eines zweiten Drehgelenks (36, 35) um eine Längsachse dreh- oder schwenkbar und einklappbar ist,
wobei der Gelenkabschnitt (30) ein erstes und ein zweites Anschlusselement (40, 80) und ein Gelenkmittelteil (50) aufweist,
das erste Anschlusselement (40) zur mittelbaren oder unmittelbaren Ankopplung an die Material-Verarbeitungseinrichtung (10) und das zweite Anschlusselement (80) zur mittelbaren oder unmittelbaren Ankopplung an den Transportabschnitt (24) ausgerüstet ist, und die Anschlusselemente (40, 80) und der Gelenkmittelteil (50) mittels der beiden Drehgelenke (35, 36) gekoppelt sind,
wobei eine zweite Drehachse des zweiten Drehgelenks (36) in Richtung der Längserstreckung des Transportabschnitts (24) ausgerichtet ist und eine erste Drehachse des ersten Drehgelenks (35) in einem Winkel zu der zweiten Drehachse ausgerichtet ist, **dadurch gekennzeichnet, dass** zwischen dem Gelenkmittelteil (50) und dem zweiten Anschlusselement (80) ein erster Aktuator (90) wirkt, derart, dass er den Transportabschnitt um eine Längsachse dreht oder schwenkt, und dass der erste Aktuator (90) abhängig von der gewählten Anschlagart des Transportabschnitts (24) an der Material-Verarbeitungseinrichtung (10) in zwei verschiedenen Montagepositionen an dem Gelenkmittelteil (50) befestigbar ist.

2. Fördereinrichtung nach Anspruch 1,
**dadurch gekennzeichnet,**
**dass** das erste Anschlusselement (40) eine mechanische Schnittstelle aufweist, mit der es mittelbar oder unmittelbar lösbar wahlweise an einer der beiden Seiten der Material-Verarbeitungseinrichtung (10) ankoppelbar ist.

3. Fördereinrichtung nach Anspruch 1 oder 2,
**dadurch gekennzeichnet,**
**dass** das zweite Anschlusselement (80) eine mechanische Schnittstelle aufweist, mit der es mittelbar oder unmittelbar lösbar mit dem Transportabschnitt (24) koppelbar ist.

4. Fördereinrichtung nach einem der Ansprüche 1 bis 3,
**dadurch gekennzeichnet,**
**dass** das Gelenkmitteilteil (50) eine erste Gelenkaufnahme (51) aufweist, die in Flucht zu einer zweiten Gelenkaufnahme (45) des ersten Anschlusselements (40) oder des zweiten Anschlusselements (80) steht, und
**dass** die Gelenkaufnahmen (45, 51) mit einem zweiten Lagerbolzen (60) zur Bildung des ersten Drehgelenks (35) miteinander gekoppelt sind.

5. Fördereinrichtung nach einem der Ansprüche 1 bis 4,
**dadurch gekennzeichnet,**
**dass** an dem Gelenkmittelteil (50) eine erste Lagerhülse (58) befestigt ist, deren Längsachse zum zweiten Anschlusselement (80) hin ausgerichtet ist, dass an dem zweiten Anschlusselement (80) eine zweite Lagerhülse (83) befestigt ist, deren Längsachse zur Längsachse der ersten Lagerhülse (58) fluchtet und dass ein Lagerbolzen (70) in einer der Lagerhülsen (58, 72) drehbar gelagert ist und in der anderen Lagerhülse (83) nicht drehbar befestigt ist.

6. Fördereinrichtung nach einem der Ansprüche 1 bis 5,
**dadurch gekennzeichnet,**
**dass** das Gelenkmitteilteil (50) die beiden Drehgelenke (35, 36) aufnimmt und dass die Drehachsen der beiden Drehgelenke (35, 36) zueinander im Winkel, vorzugsweise von 90°, angeordnet sind.

7. Fördereinrichtung nach einem der Ansprüche 1 bis 6,
**dadurch gekennzeichnet,**
**dass** dem zweiten Drehgelenk (36) ein erster und/oder dem ersten Drehgelenk (35) ein zweiter Aktuator (90, 100) zugeordnet ist.

8. Fördereinrichtung nach Anspruch 7,
**dadurch gekennzeichnet,**
**dass** das Gelenkmittelteil (50) ein Ankoppelelement (53, 54) aufweist, das mit dem zweiten Aktuator (100) verbunden ist, um den Transportabschnitt (24) einzuklappen.

9. Fördereinrichtung nach Anspruch 8,
**dadurch gekennzeichnet,**
**dass** das Gelenkmittelteil (50) ein erstes und ein zweites Ankoppelelement (53, 54) aufweist, oder
**dass** das Gelenkmittelteil (50) ein Ankoppelelement (53, 54) aufweist, das derart angeordnet ist, dass es wahlweise links- oder rechtsseitig des Gelenkmittelteils (50) mit dem zweiten Aktuator (100) koppelbar ist.

10. Fördereinrichtung nach einem der Ansprüche 1 bis 9,
**dadurch gekennzeichnet,**
**dass** zwischen dem Gelenkmittelteil (50) und einem der Anschlusselemente (40, 80) ein Anschlagelement (32) zur Begrenzung der Dreh-/Schwenk- oder Klappbewegung des Transportabschnitts (24) wirksam ist.

11. Fördereinrichtung nach einem der Ansprüche 1 bis 10,
**dadurch gekennzeichnet,**
**dass** die Ausrichtung des Transportabschnitts (24) in dessen eingeschwenkten Transportstellung und/oder dessen ausgeschwenkten Arbeitsstellung um dessen Längsachse mittels eines Justierelements (32) einstellbar ist.

12. Fördereinrichtung nach Anspruch 10 oder 11,
**dadurch gekennzeichnet,**
**dass** zumindest ein Arretierstift (31) an dem Gelenkmittelteil (50) festlegbar ist, dass das an dem zweiten Anschlusselement (80) angeordnete Anschlagelement (32) in der arretierten Position des zweiten Drehgelenks (36) zumindest in einer Drehrichtung des zweiten Drehgelenks (36) an dem Arretierstift (31) anliegt und dass die Position des Anschlagelements gegenüber dem zweiten Anschlusselement (80) einstellbar ist.

13. Fördereinrichtung nach einem der Ansprüche 1 bis 12,
**dadurch gekennzeichnet,**
**dass** zwischen dem Gelenkabschnitt (30), vorzugsweise dem Gelenkmittelteil (50) und der Material-Verarbeitungseinrichtung (10) oder dem Basisteil (110) eine Stützstrebe (33) wirksam ist.

14. Verfahren zur Umrüstung einer Fördereinrichtung (20) gemäß einem der Ansprüche 1 bis 13 an einer Material-Verarbeitungseinrichtung (10), wobei die Fördereinrichtung (20) anklappbar und dreh- oder schwenkbar an einer Seite der Material-Verarbeitungseinrichtung (10) angebaut ist, wobei die Fördereinrichtung (20) auch an der gegenüberliegenden zweiten Seite der Material- Verarbeitungseinrichtung (10) anbaubar ist,
**dadurch gekennzeichnet,**
**dass** die Fördereinrichtung (20) derart an beiden Seiten mittels eines Gelenkabschnittes (30) anbaubar ist, dass sich die Fördereinrichtung (20) bei beiden Montagezuständen im an die Maschinenseite angeklappten Zustand jeweils mit gleicher Orientierung entweder zur Maschinenvorderseite oder zur Maschinenrückseite hin erstreckt.

## Claims

1. Conveying device (20) for a material processing device (10), having a base section (110) and a transport section (24), the base section (110) being designed for coupling to the material processing device (10) and being connected to the transport section (24) via an hinge section (30) in such a manner that the transport section (24) is rotatable or pivotable and retractable between a working position and a transport position on at least a part of the adjustment path of the transport section (24) by means of a first and a second pivot joint (36, 35) about a longitudinal axis, wherein the hinge section (30) comprises a first and a second connection element (40, 80) and a hinge middle part (50),
the first connection element (40) is equipped for indirect or direct coupling to the material processing device (10) and the second connection element (80) is equipped for indirect or direct coupling to the transport section (24), and
the connecting elements (40, 80) and the hinge middle part (50) are coupled by means of the two pivot joints (35, 36),
wherein a second axis of rotation of the second pivot joint (36) is aligned in the direction of the longitudinal extension of the transport section (24) and a first axis of rotation of the first pivot joint (35) is aligned at an angle to the second axis of rotation, **characterized in**
**that** a first actuator (90) acts between the hinge middle part (50) and the second connection element (80) such that it rotates or pivots the transport section about a longitudinal axis, and
in that the first actuator (90) can be fastened to the hinge part (50) in two different mounting positions depending on the selected stop type of the transport section (24) on the material processing device (10).

2. Conveying device according to claim 1,
**characterized in that**
the first connection element (40) has a mechanical interface by means of which it can be coupled indirectly or directly releasably selectively to one of the two sides of the material-processing device (10).

3. Conveying device according to claim 1 or 2,
**characterized in that**
the second connection element (80) has a mechanical interface by means of which it can be coupled indirectly or directly releasably to the transport section (24).

4. Conveying device according to one of claims 1 to 3,
**characterized in that**
the hinge middle part (50) has a first joint receiving means (51) which is in alignment with a second joint receiving means (45) of the first connection element (40) or of the second connection element (80), and
the joint receptacles (45, 51) are coupled to each other by a second bearing pin (60) to form the first pivot joint (35).

5. Conveying device according to any one of claims 1 to 4,
**characterized in that**
a first bearing sleeve (58) is fixed to the joint middle part (50), the longitudinal axis of which is aligned with the second connection element (80), that a second bearing sleeve (83) is fixed to the second connection element (80), the longitudinal axis of which is aligned with the longitudinal axis of the first bearing sleeve (58), and that a bearing bolt (70) is rotatably mounted in one of the bearing sleeves (58, 72) and is non-rotatably fixed in the other bearing sleeve (83).

6. Conveying device according to any one of claims 1 to 5,
**characterized in that**
the joint middle part (50) accommodates the two rotary joints (35, 36), and
the axes of rotation of the two pivot joints (35, 36) are arranged at an angle to each other, preferably of 90°.

7. Conveying device according to one of the claims 1 to 6,
**characterized in that**
a first actuator (90, 100) is associated with the second pivot joint (36) and/or a second actuator (90, 100) is associated with the first pivot joint (35).

8. Conveying device according to claim 7,
**characterized in that**
the hinge middle part (50) has a coupling element (53, 54) which is connected to the second actuator (100) in order to fold in the transport section (24).

9. Conveying device according to claim 8,
**characterized in that**
the hinge middle part (50) comprises a first and a second coupling element (53, 54), or
the articulation means part (50) comprises a coupling element (53, 54) arranged to be selectively couplable to the second actuator (100) on the left or right side of the articulation means part (50).

10. Conveying device according to any one of claims 1 to 9,
**characterized in that**
a stop element (32) for limiting the rotational/swivelling or folding movement of the transport section (24) is effective between the hinge middle part (50) and one of the connection elements (40, 80).

11. Conveying device according to any one of claims 1 to 10,
**characterized in that**
the alignment of the transport section (24) in its swivelled-in transport position and/or its swivelled-out working position about its longitudinal axis is adjustable by means of an adjusting element (32).

12. Conveying device according to claim 10 or 11,
**characterised in that**
at least one locking pin (31) can be fixed to the joint middle part (50), **in that** the stop element (32) arranged on the second connection element (80) bears against the locking pin (31) in the locked position of the second rotary joint (36) at least in one direction of rotation of the second rotary joint (36), and **in that** the position of the stop element relative to the second connection element (80) can be adjusted.

13. Conveying device according to any one of claims 1 to 12,
**characterized in that**
a support strut (33) is effective between the joint section (30), preferably the joint middle part (50) and the material processing device (10) or the base part (110).

14. Method of converting a conveying device (20) according to any one of claims 1 to 13 on a material processing device (10), wherein the conveying device (20) is hingedly and rotatably or pivotally mountable on one side of the material processing device (10), wherein the conveying device (20) is also mountable on the opposite second side of the material processing device (10),
**characterized in that**
the conveying device (20) can be attached to both sides by means of a hinge section (30) in such a way that, in both assembly states, the conveying device (20) extends in each case with the same orientation either towards the front side of the machine or towards the rear side of the machine in the state in which it is folded against the side of the machine.

## Revendications

1. Dispositif de transport (20) pour un dispositif de traitement de matériaux (10), avec une section de base (110) et une section de transport (24), la section de base (110) étant conçue pour être couplée au dispositif de traitement de matériaux (10) et étant reliée à la section de transport (24) par l'intermédiaire d'une section articulée (30) de telle manière que la section de transport (24) est rotative ou pivotante et rétractable entre une position de travail et une position de transport sur au moins une partie du trajet de réglage de la section de transport (24) au moyen d'une première et d'une deuxième articulation pivotante (36, 35) autour d'un axe longitudinal, dans lequel
la section d'articulation (30) comprend un premier et un deuxième éléments de connexion (40, 80) et une partie centrale d'articulation (50)
le premier élément de connexion (40) est équipé pour un couplage indirect ou direct au dispositif de traitement de matériaux (10) et le second élément de connexion (80) est équipé pour un couplage indirect ou direct à la section de transport (24) ; et
les éléments de connexion (40, 80) et la partie centrale de l'articulation (50) sont couplés au moyen des deux articulations rotatives (35, 36)
dans lequel un deuxième axe de rotation de la deuxième articulation pivotante (36) est aligné dans la direction de l'extension longitudinale de la section de transport (24) et un premier axe de rotation de la première articulation pivotante (35) est aligné selon un angle par rapport au deuxième axe de rotation, **caractérisé**
**en ce qu'**un premier actionneur (90) agit entre la partie centrale de charnière (50) et le deuxième élément de connexion (80) de telle sorte qu'il fait tourner ou pivoter la section de transport autour d'un axe longitudinal, et
**en ce que** le premier actionneur (90) peut être fixé à la partie centrale articulée (50) dans deux positions de montage différentes, en fonction du type d'arrêt sélectionné de la section de transport (24) sur le dispositif de traitement de matériaux (10).

2. Dispositif de convoyage selon la revendication 1,
**caractérisé**
**en ce que** le premier élément de raccordement (40) présente une interface mécanique au moyen de laquelle il peut être couplé de manière indirecte ou directe et amovible sélectivement à l'un des deux côtés du dispositif de traitement de matériaux (10).

3. Dispositif de convoyage selon la revendication 1 ou 2,
**caractérisé**
**en ce que** le deuxième élément de liaison (80) présente une interface mécanique au moyen de laquelle il peut être couplé de manière indirecte ou directe et amovible à la section de transport (24).

4. Dispositif de convoyage selon l'une quelconque des revendications 1 à 3,
**caractérisé**
**en ce que** l'élément de joint (50) a un premier moyen de réception de joint (51) qui est en alignement avec un second moyen de réception de joint (45) du premier élément de connexion (40) ou du second élément de connexion (80), et
que les réceptacles d'articulation (45, 51) sont couplés l'un à l'autre avec un second axe de support (60) pour former la première articulation pivotante (35).

5. Dispositif de convoyage selon l'une quelconque des revendications 1 à 4,
**caractérisé**
**en ce qu'**un premier manchon de palier (58) est fixé à la partie centrale de l'articulation (50), dont l'axe longitudinal est aligné avec le deuxième élément de connexion (80), en ce qu'un deuxième manchon de palier (83) est fixé au deuxième élément de connexion (80), dont l'axe longitudinal est aligné avec l'axe longitudinal du premier manchon de palier (58), et en ce qu'un boulon de palier (70) est monté de manière rotative dans l'un des manchons de palier (58, 72) et est fixé de manière non rotative dans l'autre manchon de palier (83).

6. Dispositif de convoyage selon l'une quelconque des revendications 1 à 5,
**caractérisé**
**en ce que** la partie centrale du joint (50) reçoit les deux joints rotatifs (35, 36), et
**en ce que** les axes de rotation des deux articulations pivotantes (35, 36) sont disposés selon un angle l'un par rapport à l'autre, de préférence de 90°.

7. Dispositif de convoyage selon l'une quelconque des revendications 1 à 6,
**caractérisé**
**en ce qu'**un premier actionneur (90, 100) est associé à la seconde articulation pivotante (36) et/ou qu'un second actionneur (90, 100) est associé à la première articulation pivotante (35).

8. Dispositif de convoyage selon la revendication 7,
**caractérisé**
**en ce que** le moyen d'articulation (50) comprend un élément de couplage (53, 54) relié au second actionneur (100) pour plier la section de transport (24).

9. Dispositif de convoyage selon la revendication 8,
**caractérisé**
**en ce que** l'élément de moyen d'articulation (50) comprend un premier et un second élément de couplage (53, 54), ou
**en ce que** la partie de moyen d'articulation (50) comprend un élément de couplage (53, 54) agencé pour être couplé de manière sélective au second actionneur (100) sur le côté gauche ou droit de la partie de moyen d'articulation (50).

10. Dispositif de convoyage selon l'une quelconque des revendications 1 à 9,
**caractérisé**
**en ce qu'**un élément de butée (32) destiné à limiter le mouvement de rotation/pivotement ou de pliage de la section de transport (24) est actif entre la partie de moyen d'articulation (50) et l'un des éléments de liaison (40, 80).

11. Dispositif de convoyage selon l'une quelconque des revendications 1 à 10,
**caractérisé**
**en ce que** l'alignement de la section de transport (24) dans sa position de transport rentrée et/ou sa position de travail sortie autour de son axe longitudinal est réglable au moyen d'un élément de réglage (32).

12. Dispositif de convoyage selon la revendication 10 ou 11,
**caractérisé**
**en ce qu'**au moins une goupille de verrouillage (31) peut être fixée sur la partie de moyen d'articulation (50), en ce que l'élément de butée (32) disposé sur le deuxième élément de liaison (80) s'appuie contre la goupille de verrouillage (31) dans la position verrouillée de la deuxième articulation tournante (36) au moins dans un sens de rotation de la deuxième articulation tournante (36), et en ce que la position de l'élément de butée par rapport au deuxième élément de liaison (80) est réglable.

13. Dispositif de convoyage selon l'une quelconque des revendications 1 à 12,
**caractérisé**
**en ce qu'**une entretoise de support (33) est efficace entre la section de joint (30), de préférence la partie centrale de joint (50) et le dispositif de traitement de matériaux (10) ou la partie de base (110).

14. Procédé de transformation d'un dispositif de convoyage (20) selon l'une quelconque des revendications 1 à 13 sur un dispositif de traitement de matériau (10), dans lequel le dispositif de convoyage (20) peut être monté de manière articulée et rotative ou pivotante sur un côté du dispositif de traitement de matériau (10), dans lequel le dispositif de convoyage (20) peut également être monté sur le deuxième côté opposé du dispositif de traitement de matériau (10),
**caractérisé**
**en ce que** le dispositif de transport (20) peut être fixé des deux côtés au moyen d'une section de charnière (30) de telle sorte que, dans les deux états de montage, le dispositif de transport (20) s'étend à chaque fois avec la même orientation soit vers le côté avant de la machine, soit vers le côté arrière de la machine lorsqu'il est replié sur le côté de la machine.
